## Europäisches Patentamt
## European Patent Office
## Office européen des brevets

(19)

(11) Veröffentlichungsnummer: **0 144 067**
**B1**

(12) **EUROPÄISCHE PATENTSCHRIFT**

(45) Veröffentlichungstag der Patentschrift:
21.02.90

(21) Anmeldenummer: 84114398.5

(22) Anmeldetag: 28.11.84

(51) Int. Cl.⁵: **H 04 B 3/23**

(54) **Verfahren und Schaltungsanordnung zur Kompensation von Übersprech- u./o. Echosignalen.**

(30) Priorität: 01.12.83 DE 3343584
17.04.84 DE 3414534
17.04.84 DE 3414523
17.04.84 DE 3414554

(43) Veröffentlichungstag der Anmeldung:
12.06.85 Patentblatt 85/24

(45) Bekanntmachung des Hinweises auf die Patenterteilung:
21.02.90 Patentblatt 90/8

(84) Benannte Vertragsstaaten:
AT BE CH DE FR GB IT LI NL SE

(56) Entgegenhaltungen:
EP-A- 0 054 609
DE-A- 2 126 466
FR-A- 2 517 906

FREQUENZ, Band 37, Nr. 6, Juni 1983, Seiten 145-154, Berlin, DE; R. TILL: "Adaptive Sprecherecho-Kompensation in Modems für die Duplex-Datenübertragung im Fernsprechnetz"
PATENTS ABSTRACTS OF JAPAN, Band 1, Nr. 146, 26. November 1977, Seite 7545 E 77; & JP - A - 52 86 753 (NIPPON DENKI K.K.) 19-07-1977
1976 NATIONAL TELECOMMUNICATIONS CONFERENCE, Dallas, Texas, 29. November - 1.

(73) Patentinhaber: Siemens Aktiengesellschaft, Wittelsbacherplatz 2, D-8000 München 2 (DE)

(72) Erfinder: Schenk, Heinrich, Dr., Becker-Gundahl Strasse 1, D-8000 München (DE)

(56) Entgegenhaltungen: (Fortsetzung)
Dezember 1976, Band 1, Papier 8.3, Seiten 1-7, IEEE, New York, US; D.D. FALCONER et al.: "Echo cancellation techniques for full-duplex data transmission on two wire lines"
NTG FACHTAGUNG, NEUE ASPEKTE DER INFORMATIONS- UND SYSTEMTHEORIE, 23.-25. März 1983, Seiten 115-127, Garmisch-Partenkirchen, DE; HESPELT et al.: "Ein verbesserter Echolöscher für die Duplex-Datenübertragung über 2-Draht-Verbindungen"

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

In Fernmeldesystemen können bei der Übertragung von Signalen lineare Signalstörungen entstehen, zu deren Beseitigung Kompensationsschaltungen eingesetzt werden können. Solche Störungen können beispielsweise in Fernmeldesystemen, in denen zur Überführung von Zweidrahtleitungen in vierdrähtige Leitungsabschnitte und umgekehrt Gabelschaltungen (Brückenschaltungen) vorgesehen sind, dadurch hervorgerufen werden, dass eine solche Gabelschaltung eine exakte Nachbildung der Eingangsimpedanz der Zweidrahtleitung enthalten müsste, um eine vollständige Entkopplung des von der Gabelschaltung abgehenden (Empfangs-)Zweigs des Vierdahtleitungsabschnittes von den bei der Gabelschaltung ankommenden (Sende-)Zweig des Vierdrahtleitungsabschnitts zu erzielen, wozu die Leitungsnachbildung im Einzelfall durch exakten Abgleich an die jeweilige Zweidrahtleitung angepasst sein muss; mit einer in der Praxis vielfach angewendeten Kompromissnachbildung, mit der man unterschiedlichen Leitungsimpedanzen Rechnung zu tragen sucht, vermag die Gabelschaltung, die dann eine von der jeweiligen Leitungsimpedanz abhängige endliche Sperrdämpfung aufweist, die Sende- und Empfangssignale nur begrenzt voneinander zu entkoppeln. Auf der anderen Seite können auch bei optimalem Abgleich der Gabelschaltung Echos des eigenen Sendesignals, die durch auf der Zweidrahtleitung vorhandene Reflexionsstellen hervorgerufen werden, nicht ohne weiters unterdrückt werden. Ausser den im Vorstehenden erwähnten Störsignalen können schliesslich auch im Übertragungskanal hervorgerufene lineare Signalverzerrungen auszugleichen sein, was mit Hilfe eines adaptiven Entzerrers geschehen kann.

Zur Eliminierung oder zumindest Verringerung von Übersprech- u./o. Echosignalen ist es (z.B. aus Agard Conf. Proc. No.103 (1972), 12-1...12-16, insbesondere Fig. 12 und Fig. 13; aus Frequenz 29(1974)5, 118...122 und 155...161, 122; aus Der Fernmelde-Ingenieur 31(1977)12, 1...25, 21; aus NTG-Fachtagung Neue Aspekte der Informations- und Systemtheorie, 23.-25.3.1983, Seiten 115...117, Bild 2; oder auch aus Frequenz 37(1983)6, 145...154, Bild 8c) bekannt, zwischen dem bei einer Gabelschaltung ankommenden Vierdrahtleitungszweig und dem von der Gabelschaltung abgehenden Vierdrahtleitungszweig eine adaptive Übersprech- u./o. Echokompensationsschaltung mit einem variablen, nichtrekursiven Transversalfilter und einem das Kompensationssignal in den abgehenden Vierdrahtleitungszweig einkoppelnden Verknüpfungsglied vorzusehen, in der die Filterkoeffizienten in einer (prinzipiell z.B. auch aus NTZ 24(1971)1, 18...24; oder aus Bocker: Datenübertragung, Band 1, Kap. 5.3.2 bekannten) Regelschaltung nach Massgabe des nach der Kompensation im abgehenden Vierdrahtleitungszweig auftretenden Restsignals eingestellt werden, so dass dieses Restsignal minimiert wird.

Eine solche Einstellung des adaptiven Filters, die unabhängig vom Zustand einer im abgehenden Vierdrahtleitungszweig nachfolgenden, vor einem Entscheider in der Regel einen adaptiven Entzerrer aufweisenden Empfangsschaltung ist und bei der als Regelkriterium das kompensierte Empfangssignal, d.h. das Empfangsschaltungs-Eingangssignal (oder auch nur dessen Vorzeichen) dient, ermöglicht an sich ein sicheres Einlaufen der Kompensationsschaltung in den Status der höchsten erreichbaren Kompensationsgenauigkeit; da indessen dem Kompensationsfehlersignal (Restsignal) das von der Zweidrahtleitung herkommende Nutzsignal überlagert ist, ist, um das Einlaufen mit der gewünschten Genauigkeit zu gewährleisten, die Verstellgrösse für die Filterkoeffizienten sehr klein zu wählen, was eine relativ lange Einlaufzeit und eine grosse Koeffizientenwortlänge zur Folge hat.

Des weiteren ist es zur Eliminierung oder zumindest Verringerung von Übersprech- u./o. Echosignalen (aus The Bell System Technical Journal 58(1979)2, 491...500, 493; aus NTG-Fachtagung «Neue Aspekte der Informations- und Systemtheorie» 23.-25.3.1983, Seiten 115...117, Bild 4; oder auch aus Frequenz 37(1983)6, 145...154, Bild 8c) bekannt, in einer solchen Kompensationsschaltung mit einem nichtrekursiven digitalen Filter mit variablen Koeffizienten den Entscheidungsfehler des in der Empfangsschaltung enthaltenen Entscheiders, d.h. die Differenz zwischen dem (kompensierten) Eingangssignal und dem Ausgangssignal des im abgehenden Vierdrahtleitungszweig liegenden Entscheiders, als Regelkriterium für die Einstellung der Filterkoeffizienten heranzuziehen. Hierbei wird bei gegebener Synchronisation, so dass keine Fehlentscheidungen zustandekommen, lediglich das Kompensationsfehlersignal (Restsignal) als Regelkriterium wirksam, was ein schnelles Einlaufen der Kompensationsschaltung bei relativ kleiner Koeffizientenwortlänge zur Folge hat; bei Fehlen der Synchronisation kommt es dagegen zu Fehlentscheidungen, die ihrerseits lange Einstellzeiten sowie Stabilitätsprobleme nach sich ziehen.

Der Erfindung liegt nun die Aufgabe zugrunde, bei einer adaptiven Übersprech- u./o. Echokompensation mittels eines variablen Filters und eines das Kompensationssignal in den abgehenden Vierdrahtleitungszweig einkoppelnden Verknüpfungsglieds ein sowohl sicheres als auch schnelles Einlaufen der Kompensationsschaltung in einen Zustand hoher Kompensationsgenauigkeit auch ohne besondere Synchronisationsvoraussetzungen, d.h. auch aus undefinierten Anfangszuständen heraus, zu ermöglichen.

Die Erfindung betrifft ein Verfahren zur Kompensation von Übersprech- u./o. Echosignalen in einem Digital-Fernmeldesystem mit einer zwischen einem insbesondere bei einer zwischen einer Vierdrahtleitung und einer Zweidrahtleitung liegenden Gabelschaltung ankommenden Vierdrahtleitungszweig (Sendezweig) und einem insbesondere von der Gabelschaltung abgehenden Vierdrahtleitungszweig (Empfangszweig) vorgesehenen adaptiven Übersprech- u./o. Echokompensationsschaltung mit einem variablen Filter und einem das Kompensationssignal in den abgehenden Vierdrahtleitungszweig einkoppelnden Verknüpfungsglied, demzufolge das Kompensationssignal in Abhängigkeit von der Differenz zwischen einem nach der Übersprech- u./o. Echokompensation im Anschluss an eine adaptive Signalentzerrung gebildeten Entscheiderausgangssignal und dem Entscheidereingangssignal bzw. in Abhängigkeit von dem kompensierten Empfangssignal gebildet wird; dieses Verfahren ist erfindungsgemäss dadurch gekennzeichnet, dass die Filterkoeffizienten im Betrieb bei grösserer Differenz zwischen Entscheidereingangssignal und Entscheiderausgangssignal zunächst nach Massgabe des kompensierten Empfangssignals und bei kleinerer Differenz zwischen Entscheidereingangssignal und Entscheiderausgangssignal nach Massgabe dieser Differenz eingestellt werden.

Die Erfindung, die mit einer relativ grossen Verstellgrösse bei der Koeffizienteneinstellung nach Massgabe des kompensierten Empfangssignals zunächst relativ schnell eine Grobkompensation bewirkt und damit dann eine den Entscheidungsfehler von Nutzsignalverzerrungseinflüssen befreiende adaptive Signalentzerrung ermöglicht, bringt den Vorteil mit sich, insgesamt mit einer grösseren Verstellgrösse für die Filterkoeffizienten arbeiten zu können, so dass die Einlaufzeit der Kompensationsschaltung und die Koeffizientenwortlänge relativ kurz sind, zugleich aber auch aus undefinierten Anfangszuständen heraus ein sicheres Einlaufen der Kompensationsschaltung in den Status der höchsten erreichbaren Kompensationsgenauigkeit und damit eine sehr exakte Störsignalkompensation zu gewährleisten.

Vor der eigentlichen Übersprech- u./o. Echokompensation kann in Ausgestaltung der Erfindung zunächst eine Kompromissentzerrung des Empfangssignals stattfinden, durch die in Verbindung mit einer entsprechenden Taktregelung durch Vorschwingungen der Kanalimpulsantwort bedingte Verzerrungen wesentlich verringert werden, so dass auf einen speziellen Vorschwingerentzerrer verzichtet werden kann.

Nach der eigentlichen Übersprech- u./o. Echokompensation kann in weiterer Ausgestaltung der Erfindung zunächst eine geregelte Verstärkung stattfinden; dabei kann die Verstellgrösse für die Fitlerkoeffizienten in Abhängigkeit von der jeweiligen Verstärkung gebildet werden, indem bei grösserer Verstärkung die Verstellgrösse kleiner und bei kleinerer Verstärkung die Verstellgrösse grösser gemacht wird, was zu einer Beschleunigung der Grobkompensation beiträgt.

Weitere Besonderheiten der Erfindung werden aus der nachstehenden näheren Erläuterung von Schaltungsanordnungen gemäss der Erfindung anhand der Zeichnungen ersichtlich.

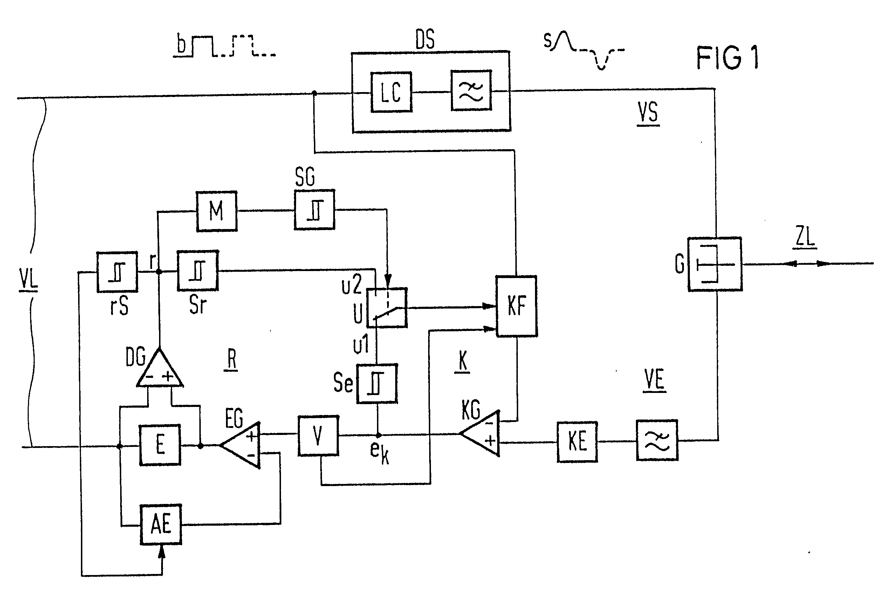

In der Zeichnung Fig. 1 ist schematisch in einem zum Verständnis der Erfindung erforderlichen Umfange ein Digital-Fernmeldesystem mit einer zwischen einem Vierdrahtleitungsabschnitt VL und einem Zweidrahtleitungsabschnitt ZL liegenden Gabelschaltung G dargestellt, in dem zwischen dem bei der Gabelschaltung G ankommenden Vierdrahtleitungs-Sendezweig VS und dem von der Gabelschaltung G abgehenden Vierdrahtleitungs-Empfangszweig VE eine Übersprech- u./o. Echo-Kompensationsschaltung K mit einem variablen Filter KF und einem das von diesem gebildete Kompensationssignal in den abgehenden Vierdrahtleitungszweig VE einkoppelnden, in der Zeichnung Fig. 1 als Differenzverstärker dargestellten Verknüpfungsglied KG vorgesehen ist. Das variable Filter KF kann vorzugsweise ein nichtrekursives digitales Transversalfilter sein, wie dies z.B. aus Agard Conf. Proc. No. 103, 1972, 12-1...12-16, und Frequenz 29 (1974) 5, 118...122 und 155...161 bekannt ist und hier daher nicht in weiteren Einzelheiten dargestellt zu werden braucht.

Der Vierdrahtleitungsabschnitt VL weist in seinem bei der Gabelschaltung G ankommenden (Sende-)Zweig VS eine Digitalsignal-Sendeschaltung DS zum Aussenden von Sendesignalimpulsen s vorgegebener Form bzw. mit einem vorgegebenen Schwerpunkt ihres Frequenzspektrums auf; in der Zeichnung ist dazu angedeutet, dass die einen Leitungscodierer LC und ein Tiefpassfilter aufweisende Sendeschaltung DS ihr zugeführte Binärsignalimpulse b in AMI-Signalimpulse s umsetzen möge.

In seinem von der Gabelschaltung G abgehenden Empfangszweig VE weist der Vierdrahtleitungsabschnitt VL eine Digitalsignal-Empfangsschaltung auf, in der die Empfangssignalimpulse zunächst eine Filterschaltung und einen Kompromissentzerrer KE durchlaufen mögen, um dann zum Verknüpfungsglied KG zu gelangen, an dessen Ausgang $e_k$ das kompensierte Empfangssignal auftritt; mit dem Ausgang $e_k$ der Kompensationsschaltung K ist – gemäss der Zeichnung über einen Regelverstärker V – ein mit einem Schnitt-Trigger zu realisierender Amplitudenentscheider E verbunden. Dem Amplitudenentscheider E kann, ohne dass dies in der Zeichnung näher dargestellt ist, ein Empfangssignalwandler nachfolgen, der ihm zugeführte Signalimpulse beispielsweise in entsprechende Binärsignale umsetzen möge, wobei bei Zugrundelegung der in der Zeichnung angedeuteten Signalformen ein solcher Empfangssignalwandler im Prinzip mit einer Gleichrichterschaltung realisiert sein kann.

Die Sendesignalimpulse s gelangen vom Sendezweig VS des Vierdrahtleitungsabschnittes VL über die Gabelschaltung G zu der beispielsweise durch eine Teilnehmeranschlussleitung gebildeten Zweidrahtleitung ZL, über die sie zu der in der Zeichnung nicht näher dargestellten Gegenstelle des Digital-Fernmeldesystems, beispielsweise also zu einer Teilnehmerstelle bzw. zu einer Vermittlungsstelle, übertragen werden; in umgekehrter Übertragungsrichtung gelangen von der Gegenstelle herrührende, über die Zweidrahtleitung ZL übertragene Signalimpulse über die Gabelschaltung G als Empfangssignalimpulse zum Empfangszweig VE des Vierdrahtleitungsabschnitts VL. Weist die Zweidrahtleitung ZL Reflexionsstellen auf, wie sie durch Stellen sprunghafter Änderungen von Leitungsparametern gegeben sein können, so gelangen ausser den eigentlichen Empfangssignalimpulsen, die übrigens von ihrer Übertragung her auch mit Verzerrungen behaftet sein können, auch Echos der Sendesignalimpulse s zum Empfangszweig VE des Vierdrahtleitungsabschnittes VL, und ausserdem können bei begrenzter Gabelsperrdämpfung auch Direktanteile der Sendesignalimpulse s in den Empfangszweig VE gelangen. Im Empfangszweig VE tritt dann jeweils ein Empfangssignalgemisch aus den eigentlichen (mehr oder weniger verzerrten) Empfangssignalimpulsen und einem aus Echo- u./o. Übersprechsignalen zusammengesetzten Störsignal auf. Dieses letztere Störsignal ist mit Hilfe der nach Massgabe des Sendesignals ein entsprechendes Kompensationssignal bildenden Kompensationsschaltung K zu kompensieren, wozu in der Kompensationsschaltung K die Filterkoeffizienten des variablen Filters KF entsprechend einzustellen sind.

Zur Einstellung der Filterkoeffizienten ist in der in der Zeichnung Fig. 1 dargestellten Schaltungsanordnung zunächst eine vom Ausgang $e_k$ der Übersprech- u./o. Echo-Kompensationsschaltung K zum Regelsignaleingang des variablen Filters KF führende Regelsignalverbindung vorgesehen, die es gestattet, die Filterkoeffizienten nach Massgabe des am Kompensatorausgang $e_k$ auftretenden kompensierten Empfangssignals so einzustellen, dass das Restsignal minimiert wird. Eine solche Einstellung der Filterkoeffizienten ist z.B. aus NTZ 24 (1971)1, 18...24; aus Agard Conf. Proc. No. 103, 1972, 12-1...12-16; oder aus Bokker: Datenübertragung, Band 1, Kap. 5.3.2 prinzipiell bekannt und braucht hier daher nicht mehr näher erläutert zu werden. Bemerkt sei lediglich, dass, wie dies auch in der Zeichnung Fig. 1 angedeutet ist, in die vom Ausgang $e_k$ der Kompensationsschaltung K zum Regelsignaleingang des variablen Filters KF führende Regelsignalverbindung ein lediglich das Signalvorzeichen übertragendes Glied Se eingefügt sein kann, so dass dann die Koeffizienteneinstellung nach Massgabe des Vorzeichens des kompensierten Empfangssignals vor sich geht.

Die vom Ausgang $e_k$ der Kompensationsschaltung K zum Regelsignaleingang des variablen Filters KF führende Regelsignalverbindung verläuft in der in der Zeichnung Fig. 1 dargestellten Schaltungsanordnung gemäss der Erfindung über den einen Eingang u1 einer Umschalteinrichtung U. Zu dem anderen Eingang u2 der Umschalteinrichtung U führt ein Differenzglied DG, und zwar ggf. ebenfalls über ein lediglich das jeweilige Signalvorzeichen übertragendes Glied Sr, wie dies auch in der Zeichnung angedeutet ist. Dieses Differenzglied DG ist Teil einer Regelschaltung R, in der das Differenzglied DG eingangsseitig mit dem Eingang und mit dem Ausgang des im abgehenden Vierdrahtleitungszweig VE hinter dem Verknüpfungsglied KG der Kompensationsschaltung K liegenden Entscheiders E verbunden ist; der Entscheiderausgang ist dabei über einen ebenfalls vom Differenzglied DG gesteuerten adaptiven Entzerrer AE zu einem dem Entscheidereingang vorgeschalteten, das Entzerrerausgangssignal in den abgehenden Vierdrahtleitungszweig VE einkoppelnden Verknüpfungsglied EG rückgeführt, wobei zwischen dem Regelsignalausgang r der Regelsignalschaltung R und dem Steuereingang des adaptiven Entzerrers AE wiederum ein lediglich das Signalvorzeichen übertragendes Glied rS eingefügt sein kann. Über ein Grenzsignalglied (Schmitt-Trigger) SG ist der durch den Ausgang des Differenzgliedes DG gebildete Regelsignalausgang r der Regelsignalschaltung R mit dem Steuereingang der Umschalteeinrichtung U verbunden, wobei, wie dies auch in der Zeichnung Fig. 1 angedeutet ist, zwischen dem Regelsignalausgang r der Regelsignalschaltung R und den Schmitt-Trigger SG eine den jeweiligen Signalmittelwert bildende Mittelungsschaltung M eingefügt sein kann.

Die Festlegung eines entsprechenden Schwellwertes für den Schmitt-Trigger SG bewirkt nun, dass im variablen Filter KF das über das Verknüpfungsglied KG dem Empfangszweig VE zugeführte Kompensationssignal in Abhängigkeit von der – ggf. gemittelten – Differenz zwischen dem nach der Übersprech- u./o. Echo-Kompensation im Zuge der Amplitudenentscheidung gebildeten Entscheiderausgangssignal und dem Entscheidereingangssignal gebildet wird: Bei grösserer – ggf. gemittelter – Differenz zwischen Entscheidereingangssignal und Entscheiderausgangssignal werden die Filterkoeffizienten nach Massgabe des kompensierten Empfangssignals bzw. nach Massgabe seines Vorzeichens eingestellt; die hierdurch relativ schnell erreichbare Grobkompensation ermöglicht es dann dem adaptiven Entzerrer AE, das dem Restsignal überlagerte Nutzsignal von Verzerrungen soweit zu befreien, dass das Entscheidungsfehlersignal praktisch nur noch das Restsignal beinhaltet. Bei der damit kleineren– ggf. gemittelten – Differenz zwischen Entscheidereingangssignal und Entscheiderausgangssignal werden die Filterkoeffizienten dann nach Massgabe dieser Differenz bzw. ihres Vorzeichens eingestellt, womit ein sowohl schnelles als auch sicheres Einlaufen der Kompensationsschaltung erreicht wird. Dabei kann, wie dies in der Zeichnung noch angedeutet ist, die Verstellgrösse für die Filterkoeffizienten auch von der jeweiligen Verstärkung des Regelverstärkers V abhängig sein, indem bei grösserer Verstärkung die Verstellgrösse für das variable Filter KF kleiner und bei kleinerer Verstärkung die Verstellgrösse grösser gemacht wird.

Im Vorstehenden wurde anhand der Fig. 1 eine Schaltungsanordnung zur Kompensation von Übersprech- u./o. Echosignalen in einem Digital-Fernmeldesystem mit einer zwischen einem ankommenden Vierdrahtleitungszweig, insbesondere dem bei einer zwischen einer Vierdrahtleitung und einer Zweidrahtleitung liegenden Gabelschaltung ankommenden Vierdrahtleitungs-Sendezweig, und einem abgehenden Vierdrahtleitungs-Sendezweig, insbesondere dem vom der Gabelschaltung abgehenden Vierdrahtleitungs-Empfangszweig, vorgesehenen adaptiven Übersprech- u./o. Echokompensationsschaltung mit einem variablen Filter und einem das Kompensationssignal in den abgehenden Vierdrahtleitungszweig einkoppelnden Verknüpfungsglied erläutert, bei der eine vom Ausgang der Übersprech- u./o. Echokompensationsschaltung zum Regelsignaleingang des variablen Filters führende Regelsignalverbindung über den einen Eingang einer Umschalteinrichtung verläuft, zu deren anderem Eingang das Differenzglied einer Regelsignalschaltung führt, in der ein Differenzglied eingangsseitig mit dem Eingang und mit dem Ausgang eines im abgehenden Vierdrahtleitungszweig hinter dem Kompensationsglied liegenden Entscheiders verbunden ist, dessen Ausgang über einen ebenfalls vom Differenzglied gesteuerten adaptiven Entzerrer zu einem dem Entscheidereingang vorgeschalteten, das Entzerrerausgangssignal in den abgehenden Vierdrahtleitungszweig einkoppelnden Verknüpfungsglied führt, und bei der der Regelsignalausgang der Regelsignalschaltung über ein Grenzsignalglied (Schmitt-Trigger) mit dem Steuereingang der Umschalteinrichtung verbunden ist. In einer solchen Schaltungsanordnung konnte dem Kompensationsglied im abgehenden Vierdrahtleitungszweig ein Kompromissentzerrer vorgeschaltet sein.

Es kann indessen erwünscht sein, das für eine solche vor der Übersprech- u./o. Echokompensation stattfindende Kompromissentzerrung erforderliche relativ lange Steuerwort für den Kompromissentzerrer zu vermeiden.

Dies wird im Rahmen des eingangs umrissenen Verfahrens gemäss weiterer Erfindung dadurch erreicht, dass eine Kompromissentzerrung des kompensierten Empfangssignals stattfindet. In der vorstehend umrissenen Schaltungsanordnung ist hierzu gemäss weiterer Erfindung in die vom Kompensationsglied zu dem dem Entscheidereingang vorgeschalteten Verknüpfungsglied führende Verbindung ein Kompromissentzerrer eingefügt.

Diese Weiterbildung der Erfindung ermöglicht es, mit einem kürzeren Steuerwort für den Kompromissentzerrer auszukommen, als es für eine vor der Übersprech- u./o. Echokompensation stattfindende Kompromissentzerrung erforderlich wäre.

Mit der oben erläuterten, aus Fig. 1 ersichtlichen entscheidungsrückkoppelnden adaptiven Signalentzerrung lassen sich Empfangssignal-Nachschwinger eliminieren. Es kann indessen zusätzlich auch eine Eliminierung von Vorschwingern des kompensierten Empfangssignals erwünscht sein.

Dies wird im Rahmen des eingangs umrissenen Verfahrens gemäss weiterer Erfindung dadurch erreicht, dass zwischen der Kompensation des Empfangssignals und der Amplitudenentscheidung eine adaptive Entzerrung stattfindet.

In der vorstehend umrissenen Schaltungsanordnung ist hierzu gemäss weiterer Erfindung in die vom Kompensationsglied zu dem dem Entscheidereingang vorgeschalteten Verknüpfungsglied führende Verbindung ein adaptiver Entzerrer eingefügt.

Die Erfindung ermöglicht damit eine Befreiung des kompensierten Empfangssignals auch von etwa störenden Vorschwingern.

Vor der adaptiven Entzerrung kann zunächst auch die erwähnte Kompromissentzerrung des kompensierten Empfangssignals stattfinden, wozu dann in die vom Kompensationsglied zum adaptiven Entzerrer führende Verbindung noch ein Kompromissentzerrer eingefügt ist.

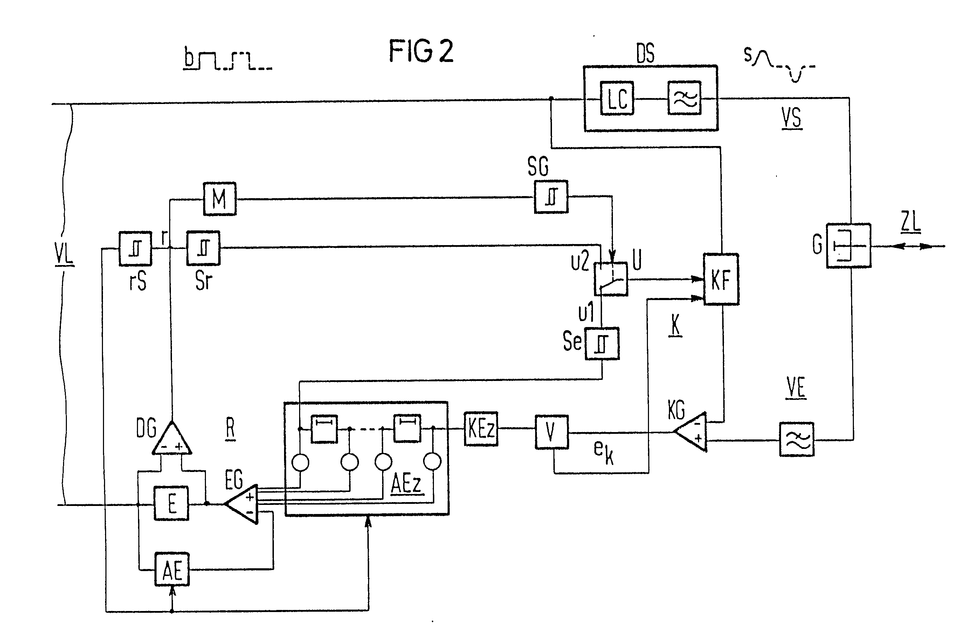

Die im Vorstehenden erwähnten Weiterbildungen werden auch aus der Zeichnung Fig. 2 ersichtlich, die ein weiteres Ausführungsbeispiel einer Schaltungsanordnung gemäss der Erfindung zeigt. Dabei stimmt das in der Zeichnung Fig. 2 dargestellte Ausführungsbeispiel eines Digital-Fernmeldesystems in seiner Struktur und Funktionsweise weitgehend mit dem anhand der Zeichnung Fig. 1 erläuterten Digital-Fernmeldesystem überein; insoweit gelten die obigen Erläuterungen der Schaltungsanordnung gemäss Fig. 1 auch für die in Fig. 2 dargestellte Schaltungsanordnung. In Abweichung von den in Fig. 1 skizzierten Verhältnissen ist in dem in Fig. 2 skizzierten Ausführungsbeispiel einer Schaltungsanordnung gemäss der Erfindung mit dem Ausgang $e_k$ der Kompensationsschaltung K über einen Regelverstärker V der Eingang eines das kompensierte Empfangssignal entzerrenden Kompromissentzerrers KEz verbunden, der statt eines das unkompensierte Empfangssignal entzerrenden Kompromissentzerrers oder auch zusätzlich dazu vorgesehen ist. Der Kompromissentzerrer KEz führt dann über einen adaptiven Entzerrer AEz, der im Beispiel durch ein Transversalfilter realisiert ist, und das beispielsweise durch ein Summierglied und einen nachfolgenden Differenzverstärker zu realisierende Verknüpfungsglied EG zum Eingang des Entscheiders E. Der adaptive Entzerrer AEz kann ebenso wie der entscheidungsrückkoppelnde adaptive Entzerrer AE eingestellt werden, wie dies auch in der Zeichnung angedeutet ist. Die beiden adaptiven Entzerrer AEz und AE befreien das kompensierte, verstärkte und kompromissentzerrte Empfangssignal dann sowohl von Signalvorschwingern als auch von Signalnachschwingern.

Die mit dem adaptiven Entzerrer AEz verbundene Verzögerung im Empfangszweig VE ist in der Einstellung der Filterkoeffizienten des variablen Filters KF über den Eingang u2 der Umschalteinrichtung U zu berücksichtigen. Um bei einer Umschaltung zwischen den Umschalteingängen u1 und u2 einen Laufzeitsprung des Einstellsignals zu vermeiden, muss bei der Einstellung der Filterkoeffizienten des variablen Filters KF über den Umschalteingang u1 die gleiche Verzögerung wirksam sein wie bei einer Filtereinstellung über den Umschalteingang u2, was in dem in Fig. 2 skizzierten Ausführungsbeispiel dadurch erreicht wird, dass die Verbindung des Ausgangs $e_k$ des Kompensationsgliedes KG mit dem Umschalteingang u1 über die Verzögerungskette des adaptiven Entzerrers AEz geführt ist. Alternativ dazu könnte ein entsprechendes Verzögerungsglied dem Umschalteingang u1 unmittelbar vorgeschaltet sein. In beiden Fällen ist dann die Verzögerung wiederum in der Einstellung der Filterkoeffizienten des variablen Filters KF zu berücksichtigen.

Wie aus den Zeichnungen Fig. 1 und Fig. 2 ersichtlich ist, kann nach der Übersprech- u./o. Echokompensation zunächst eine geregelte Verstärkung des kompensierten Empfangssignals stattfinden, wozu dem Kompensationsglied ein Regelsignalverstärker nachgeschaltet ist. Hierzu wurde oben bei der Erläuterung der Zeichnung Fig. 1 bereits angegeben, dass die Verstellgrösse für die Filterkoeffizienten des variablen Filters in Abhängigkeit von der jeweiligen Verstärkung gebildet werden kann, indem bei grösserer Verstärkung die Verstellgrösse kleiner und bei kleinerer Verstärkung die Verstellgrösse grösser gemacht wird.

Das dazu dem variablen Filter vom Regelverstärker her zugeführte Steuersignal ermöglicht dabei an sich auch eine – bei Einstellung der Filterkoeffizienten nicht nur nach Massgabe des Vorzeichens des jeweiligen Regelsignals erforderliche – Berücksichtigung des Einflusses der Empfangssignalverstärkung auf die dem Regelsignaleingang des variablen Filters zugeführten Regelsignale, was allerdings zu einer entsprechend aufwendigeren Filtereinstellung führt. Eine solche aufwendige Filtereinstellung lässt sich indessen auch vermeiden:

Dies wird im Rahmen des eingangs umrissenen, nach der Übersprech- u./o. Echokompensation zunächst eine geregelte Verstärkung vorsehenden Verfahrens gemäss weiterer Erfindung dadurch erreicht, dass das aus der Differenz zwischen Entscheidereingangssignal und Entscheiderausgangssignal abgeleitete Einstellsignal für das variable Filter und bei Ableitung des dem kompensierten Empfangssignal entsprechenden Einstellsignals aus dem kompensierten und verstärkten Empfangssignal auch dieses Einstellsignal für das variable Filter mit einem zum Verstärkungsfaktor reziprok proportionalen Faktor multipliziert wird.

In der eingangs umrissenen Schaltungsanordnung, bei der dem Kompensationsglied ein Regelverstärker nachgeschaltet ist, ist hierzu gemäss weiterer Erfindung in den über den eingangs erwähnten anderen Eingang der Umschalteinrichtung verlaufenden Regelsignalweg und bei Abzweigung des über den erwähnten anderen Umschalteingang verlaufenden Regelsignalwegs vom Empfangszweig der Vierdrahtleitung erst hinter dem Regelsignalverstärker auch in diesen Regelsignalweg jeweils ein Dämpfungsglied mit einem dem Verstärkungsfaktor des Regelsignalverstärkers proportionalen Dämpfungsfaktor eingefügt.

Diese Weiterbildung der Erfindung ermöglicht damit eine Berücksichtigung der Signalverstärkung bereits vor der eigentlichen Filtereinstellung durch eine entsprechende Korrektur des dem variablen Filter jeweils zugeführten Eingangssignals.

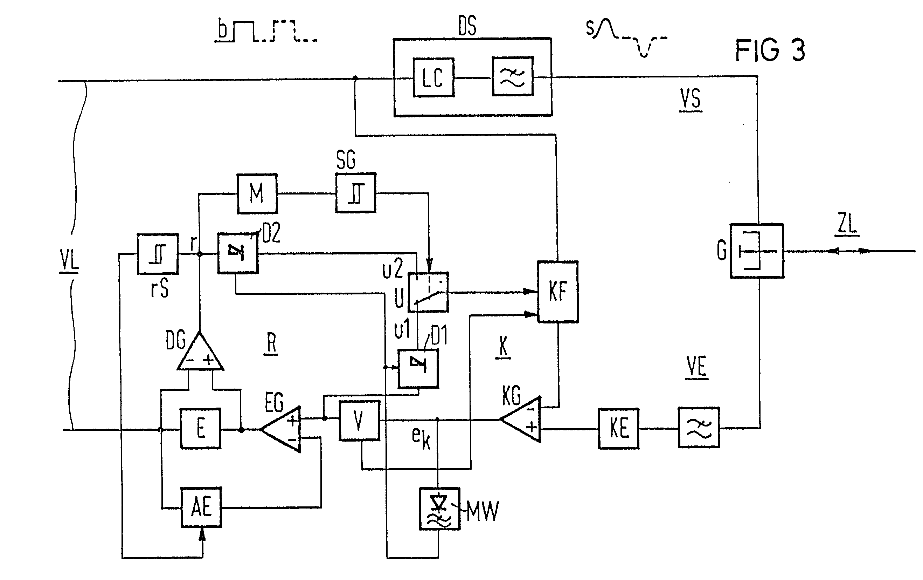

Eine solche Weiterbildung wird auch aus der Zeichnung Fig. 3 ersichtlich, die ein weiteres Ausführungsbeispiel einer Schaltungsanordnung gemäss der Erfindung zeigt. Dabei stimmt das in der Zeichnung Fig. 3 dargestellte Digital-Fernmeldesystem in seiner Struktur und Funktionsweise weitgehend mit dem anhand der Zeichnung Fig. 1 erläuterten Digital-Fernmeldesystem überein; insoweit gelten die obigen Erläuterungen der Schaltungsanordnung gemäss Fig. 1 auch für die in Fig. 3 dargestellte Schaltungsanordnung.

Zur Einstellung der Filterkoeffizienten ist in der in der Zeichnung Fig. 3 dargestellten Schaltungsanordnung zunächst eine vom Ausgang des Regelverstärkers V zum Regelsignaleingang des variablen Filters KF führende Regelsignalverbindung vorgesehen, die es gestattet, die Filterkoeffizienten nach Massgabe des am Kompensatorausgang $e_k$ auftretenden kompensierten Empfangssignals so einzustellen, dass das Restsignal minimiert wird. Eine solche Einstellung der Filterkoeffizienten ist, wie schon gesagt, z.B. aus Agard Conf. Proc. No. 103, 1972 12-1 ... 12-16, prinzipiell bekannt und braucht hier daher nicht mehr näher erläutert zu werden. In Abweichung von den in Fig. 1 skizzierten Gegebenheiten ist gemäss Fig. 3 in die vom Ausgang des Regelverstärkers V über den einen Eingang u1 einer Umschalteinrichtung U zum Regelsignaleingang des variablen Filters KF führende Regelsignalverbindung ein Dämpfungsglied D1 mit einem dem Verstärkungsfaktor des Regelsignalverstärkers V proportionalen Dämpfungsfaktor eingefügt, so dass im Ergebnis die Koeffizienteneinstellung nach Massgabe des unverstärkten kompensierten Empfangssignals vor sich geht. Dies kann natürlich auch dadurch erreicht werden, dass der Umsteuereingang u1 der Umschalteinrichtung U direkt an den Ausgang $e_k$ des Kompensationsglieds KG angeschlossen wird.

In entsprechender Weise ist gemäss Fig. 3 in die vom Ausgang des Differenzglieds DG über den anderen Eingang u2 der Umschalteinrichtung U zum Regelsignaleingang des variablen Filters KF führende Regelsignalverbindung ein Dämpfungsglied D2 mit einem dem Verstärkungsfaktor des Regelsignalverstärkers proportionalen Dämpfungsfaktor eingefügt.

In Abweichung von den in der Zeichnung Fig. 1 skizzierten Verhältnissen wird somit in dem in der anliegenden Zeichnung Fig. 3 skizzierten Ausführungsbeispiel einer Schaltungsanordnung gemäss der Erfindung, in deren zum Regelsignaleingang des variablen Filters KF führende Regelsignalverbindungen keine lediglich das Signalvorzeichen übertragende Glieder eingefügt sind, bei Verstärkung des kompensierten Empfangssignals jedenfalls das über den Umschalteingang u2 der Umschalteinrichtung U dem Regelsignaleingang des variablen Filters KF zugeführte Regelsignal – und auch das über den Umschalteingang u1 übertragene Regelsignal, wenn dieses, wie dies auch bei dem in der anliegenden Zeichnung Fig. 3 dargestellten Ausführungsbeispiel der Fall ist, hinter dem Regelsignalverstärker V abgegriffen wird – noch mit einem zum jeweiligen Verstärkungsfaktor reziprok proportionalen Faktor multipliziert, um Fehleinstellungen des Filters KF zu vermeiden. Dies kann, wie dies auch in der Zeichnung Fig. 3 angedeutet ist, mit Hilfe einer beispielsweise mit einer Gleichrichterschaltung und einer Tiefpassschaltung aufgebauten Mittelwertschaltung MW geschehen, mit deren der Amplitude des am Kompensatorausgang $e_k$ auftretenden Empfangssignals proportionalem und damit dem Verstärkungsfaktor des Regelverstärkers V umgekehrt proportionalem Ausgangssignal das jeweilige Regelsignal in dem im Beispiel als Modulator ausgebildeten Dämpfungsglied D2 bzw. D1 multipliziert wird.

Abschliessend sei noch bemerkt, dass das eigentliche Entscheidungsfehlersignal nur im Entscheidungszeitpunkt des Entscheiders E am Regelsignalausgang r der Regelsignalschaltung R auftritt; nur in diesem Zeitpunkt erfährt daher auch das Empfangssignal die erforderliche Kompensation, was indessen genügt, weil auch der Entscheider E nur in eben diesem Zeitpunkt wirksam ist. In Abweichung von der zeichnerischen Darstellung ist es natürlich auch möglich, das Empfangssignal unmittelbar hinter der im Vierdrahtleitungs-Empfangszweig VE hinter der Gabelschaltung G vorgesehenen Filterschaltung im Schrittakt einer Abtastung zu unterziehen und die Abtastwerte digital darzustellen, wobei das Empfangssignal dann in dieser Digitaldarstellung übersprech- u./o. echokompensiert wird. Das durch die Abtastung erhaltene, zwischen den Abtastzeitpunkten jeweils beibehaltene und damit treppenförmige (digital dargestellte) Empfangssignal erfährt dann in jedem Zeitpunkt die erforderliche Kompensation, wobei es aber auch hier nur auf die Kompensation im Entscheidungszeitpunkt des Entscheiders E ankommt.

## Patentansprüche

1. Verfahren zur Kompensation von Übersprech- u./o. Echosignalen in einem Digital-Fernmeldesystem mit einer zwischen einem insbesondere bei einer zwischen einer Vierdrahtleitung (VL) und einer Zweidrahtleitung (ZL) liegenden Gabelschaltung (G) ankommenden Vierdrahtleitungszweig (Sendezweig) (VS) und einem insbesondere von der Gabelschaltung (G) abgehenden Vierdrahtleitungszweig (Empfangszweig) (VE) vorgesehenen adaptiven Übersprech- u./o. Echokompensationsschaltung (K) mit einem variablen Filter (KF) und einem das Kompensationssignal in den abgehenden Vierdrahtleitungszweig (VE) einkoppelnden Verknüpfungsglied (KG), demzufolge das Kompensationssignal in Abhängigkeit von der Differenz zwischen einem nach der Übersprech- u./o. Echokompensation im Anschluss an eine adaptive Signalentzerrung gebildeten Entscheiderausgangssignal und dem Entscheidereingangssignal bzw. in Abhängigkeit von dem kompensierten Empfangssignal gebildet wird, dadurch gekennzeichnet, dass die Filterkoeffizienten im Betrieb bei grösserer Differenz zwischen Entscheidereingangssignal und Entscheiderausgangssignal zunächst nach Massgabe des kompensierten Empfangssignals und bei kleinerer Differenz zwischen Entscheidereingangssignal und Entscheiderausgangssignal nach Massgabe dieser Differenz eingestellt werden.

2. Verfahren nach Anspruch 1, dadurch gekennzeichnet, dass die Filterkoeffizienten bei grösserer gemittelter Differenz zwischen Entscheidereingangssignal und Entscheiderausgangssignal nach Massgabe des kompensierten Empfangssignals und bei kleinerer gemittelter Differenz zwischen Entscheidereingangssignal und Entscheiderausgangssignal nach Massgabe der Differenz zwischen Entscheidereingangssignal und Entscheiderausgangssignal eingestellt werden.

3. Verfahren nach Anspruch 1 oder 2, dadurch gekennzeichnet, dass vor der Übersprech- u./o. Echokompensation eine Kompromissentzerrung des Empfangssignals stattfindet.

4. Verfahren nach einem der Ansprüche 1 bis 3, dadurch gekennzeichnet, dass nach der Übersprech- u./o. Echokompensation zunächst eine geregelte Verstärkung stattfindet.

5. Verfahren nach Anspruch 4, dadurch gekennzeichnet, dass die Verstellgrösse für die Filterkoeffizienten in Abhängigkeit von der jeweiligen Verstärkung gebildet wird, indem bei grösserer Verstärkung die Verstellgrösse kleiner und bei kleinerer Verstärkung die Verstellgrösse grösser gemacht wird.

6. Verfahren nach einem der Ansprüche 1 bis 5, dadurch gekennzeichnet, dass die Filterkoeffizienten lediglich nach Massgabe des Vorzeichens der genannten Differenz bzw. des kompensierten Empfangssignals eingestellt werden.

7. Verfahren nach einem der Ansprüche 4 bis 5, dadurch gekennzeichnet, dass das aus der Differenz zwischen Entscheiderausgangssignal und Entscheidereingangssignal abgeleitete Einstellsignal für das variable Filter und bei Ableitung des dem kompensierten Empfangssignal entsprechenden Einstellsignals aus dem kompensierten und verstärkten Empfangssignal auch dieses Einstellsignal mit einem zum Verstärkungsfaktor reziprok proportionalen Faktor multipliziert wird.

8. Verfahren nach einem der Ansprüche 1 bis 7, dadurch gekennzeichnet, dass eine Kompromissentzerrung des kompensierten Empfangssignals stattfindet.

9. Verfahren nach einem der Ansprüche 1 bis 8, dadurch gekennzeichnet, dass zwischen der Kompensation des Empfangssignals und der Amplitudenentscheidung eine adaptive Entzerrung stattfindet.

10. Schaltungsanordnung zur Kompensation von Übersprech- u./o. Echosignalen in einem Digital-Fernmeldesystem mit einer zwischen einem ankommenden Vierdrahtleitungszweig (VS), insbesondere dem bei einer zwischen einer Vierdrahtleitung (VL) und einer Zweidrahtleitung (ZL) liegenden Gabelschaltung (G) ankommenden Vierdrahtleitungs-Sendezweig (VS), und einem abgehenden Vierdrahtleitungszweig (VE), insbesondere dem von der Gabelschaltung (G) abgehenden Vierdrahtleitungs-Empfangszweig (VE), vorgesehenen adaptiven Übersprech- u./o. Echokompensationsschaltung (K) mit einem variablen Filter (KF) und einem das Kompensationssignal in den abgehenden Vierdrahtleitungszweig (VE) einkoppelnden Verknüpfungsglied (KG), wobei eine vom Ausgang ($e_k$) der Übersprech- u./o. Echokompensationsschaltung (K) zum Regelsignaleingang des variablen Filters (KF) führende Regelsignalverbindung über den einen Eingang (ul) einer Umschalteinrichtung (U) verläuft, zu deren anderem Eingang (u2) das Differenzglied (DG) einer Regelsignalschaltung (R) führt, in der ein Differenzglied (DG) eingangsseitig mit dem Eingang und mit dem Ausgang eines im abgehenden Vierdrahtleitungszweig (VE) hinter dem Kompensationsglied (KG) liegenden Entscheiders (E) verbunden ist, dadurch gekennzeichnet, dass der Regelsignalausgang (r) der Regelsignalschaltung (R), deren Differenzglied (DG) eingangsseitig mit dem – ausgangsseitig über einen ebenfalls vom Differenzglied (DG) gesteuerten adaptiven Entzerrer (AE) zu einem dem Entscheidereingang vorgeschalteten, das Entzerrerausgangssignal in den abgehenden Vierdrahtleitungszweig (VE) einkoppelnden Verknüpfungsglied (EG) führenden – Entscheider (E) verbunden ist, über ein Grenzsignalglied (Schmitt-Trigger) (SG) mit dem Steuereingang der Umschalteinrichtung (U) verbunden ist.

11. Schaltungsanordnung nach Anspruch 10, dadurch gekennzeichnet, dass dem Kompensationsglied (KG) im abgehenden Vierdrahtleitungszweig (VE) ein Kompromissentzerrer (KE) vorgeschaltet ist.

12. Schaltungsanordnung nach Anspruch 10 oder 11, dadurch gekennzeichnet, dass dem Kompensationsglied (KG) im abgehenden Vierdrahtleitungszweig (VE) ein Regelverstärker (V) nachgeschaltet ist.

13. Schaltungsanordnung nach einem der Ansprüche 10 bis 12, dadurch gekennzeichnet, dass der Regelsignalausgang (r) der Regelsignalschaltung (R) über ein lediglich das Signalvorzeichen übertragendes Glied (Sr) mit dem genannten anderen Eingang (u2) der Umschalteinrichtung (U) verbunden ist.

14. Schaltungsanordnung nach einem der Ansprüche 10 bis 13, dadurch gekennzeichnet, dass in die vom Ausgang ($e_k$) der Kompensationsschaltung (K) zum Regelsignaleingang des variablen Filters (KF) führende Regelsignalverbindung ein lediglich das Signalvorzeichen übertragendes Glied (Se) eingefügt ist.

15. Schaltungsanordnung nach Anspruch 12, dadurch gekennzeichnet, dass in den über den genannten anderen Eingang (u2) der Umschalteinrichtung (U) verlaufenden Regelsignalweg und bei erst hinter dem Regelsignalverstärker (V) vom Empfangszweig (VE) der Vierdrahtleitung (VL) abzweigenden, über den genannten einen Umschalteingang (u1) verlaufenden Regelsignalweg auch in diesen Regelsignalweg jeweils ein Dämpfungsglied (D2, D1) mit einem dem Verstärkungsfaktor des Regelsignalverstärkers (V) proportionalen Dämpfungsfaktor eingefügt ist.

16. Schaltungsanordnung nach einem der Ansprüche 10 bis 15, dadurch gekennzeichnet, dass zwischen dem Regelsignalausgang (r) der Regelsignalschaltung (R) und das Grenzsignalglied (Schmitt-Trigger) (SG) eine Signalmittelungsschaltung (M) eingefügt ist.

17. Schaltungsanordnung nach einem der Ansprüche 10 bis 16, dadurch gekennzeichnet, dass der Regelsignalausgang (r) der Regelsignalschaltung (R) über ein lediglich das Signalvorzeichen übertragendes Glied (rS) mit dem Steuereingang des adaptiven Entzerrers (AE) verbunden ist.

18. Schaltungsanordnung nach einem der Ansprüche 12 bis 17, gekennzeichnet durch eine bei kleinerer Verstärkung des Regelverstärkers (V) grössere Versellgrösse und eine bei grösserer Verstärkung des Regelverstärkers (V) kleinere Verstellgrösse für das variable Filter (KF).

19. Schaltungsanordnung nach einem der Ansprüche 10 bis 18, dadurch gekennzeichnet, dass in die vom Kompensationsglied (KG) zu dem dem Entscheidereingang vorgeschalteten Verknüpfungsglied (EG) führende Verbindung ein Kompromissentzerrer (KEz) eingefügt ist.

20. Schaltungsanordnung nach einem der Ansprüche 10 bis 19, dadurch gekennzeichnet, dass in die vom Kompensationsglied (KG) zu dem dem Entscheidereingang vorgeschalteten Verknüpfungsglied (EG) führende Verbindung ein adaptiver Entzerrer (AEz) eingefügt ist.

**Revendications**

1. Procédé pour compenser des signaux de diaphonie et/ou d'échos dans un système de télécommunications numérique, comportant un circuit adaptatif (K) de compensation de la diaphonie et/ou des échos, prévu entre une branche de ligne quadrifilaire (branche d'émission) (VS), qui arrive notamment dans un termineur (G) situé entre une ligne quadrifilaire (VL) et une ligne bifilaire (ZL), et une branche de ligne quadrifilaire (branche de réception) (VE) qui part notamment du termineur (G), et comportant un filtre variable (KF) et un circuit combinatoire (KG) injectant le signal de compensation dans la branche de ligne quadrifilaire de départ (VE), le signal de compensation étant formé par conséquent en fonction de la différence entre un signal de sortie d'un discriminateur, formé après la compensation de la diaphonie et/ou des échos, à la suite d'une égalisation adaptative des signaux et le signal d'entrée du discriminateur ou bien en fonction du signal de réception compensé, caractérisé par le fait que, dans le cas d'une différence assez importante entre le signal d'entrée et le signal de sortie du discriminateur, les coefficients des filtres sont réglés, en fonctionnement, en fonction du signal de réception compensé et, dans le cas d'une différence plus faible entre le signal d'entrée et le signal de sortie discriminateur, en fonction de cette différence.

2. Procédé suivant la revendication 1, caractérisé par le fait que dans le cas d'une différence moyenne assez importante entre le signal d'entrée et le signal de sortie discriminateur, les coefficients du filtre sont réglés en fonction du signal de réception compensé et, dans le cas d'une différence moyenne plus faible entre le signal d'entrée et le signal de sortie discriminateur, en fonction de la différence entre ces signaux.

3. Procédé suivant la revendication 1 ou 2, caractérisé en ce qu'une égalisation de compromis du signal d'entrée est réalisée avant la compensation de la diaphonie et/ou des échos.

4. Procédé selon l'une des revendications 1 à 3, caractérisé en ce qu'une amplification réglée est tout d'abord exécutée après la compensation de la diaphonie et/ou des échos.

5. Procédé selon la revendication 4, caractérisé en ce que la grandeur de réglage pour les coefficients du filtre est formée en fonction de l'amplification respective, par le fait que cette grandeur de réglage est réduite dans le cas d'une amplification plus élevée et est accrue dans le cas d'une amplification plus faible.

6. Procédé suivant l'une des revendications 1 à 5, caractérisé par le fait que les coefficients du filtre sont réglés uniquement en fonction du signe de ladite différence ou du signal de réception compensé.

7. Procédé suivant l'une des revendications 4 à 5, caractérisé par le fait que le signal de réglage pour le filtre variable, qui est obtenu à partir de la différence entre le signal de sortie et le signal d'entrée du discriminateur, et, dans le cas de l'obtention du signal de réglage qui correspond au signal de réception compensé, à partir du signal de réception compensé et amplifié, ce signal de réglage est également modulé par un facteur inversement proportionnel au facteur d'amplification.

8. Procédé suivant l'une des revendications 1 à 7, caractérisé par le fait qu'une égalisation de compromis du signal d'entrée est réalisée avant la compensation de la diaphonie et/ou des échos.

9. Procédé suivant l'une des revendications 1 à 8, caractérisé par le fait qu'une amplification réglée est tout d'abord exécutée après la compensation de la diaphonie et/ou des échos.

10. Montage pour réaliser la compensation de signaux de la diaphonie et/ou des échos dans un système de télécommunications numérique comportant un circuit adaptatif (K) de compensation de la diaphonie et/ou des échos, prévu entre une branche de ligne quadrifilaire (branche d'émission) (VS), qui arrive notamment dans un termineur (G) situé entre une ligne quadrifilaire (VL), et une ligne bifilaire (ZL), et comportant un filtre variable (KF) et un circuit combinatoire (KG) injectant le signal de compensation dans la branche de ligne quadrifilaire de départ (VE), et dans lequel une liaison de transmission d'un signal de réglage, qui relie la sortie ($e_k$) du circuit (K) de compensation de la diaphonie et/ou des échos à l'entrée du signal de réglage du filtre variable (KF) incluant une entrée (u1) d'un dispositif de commutation (U), alors qu'à l'autre entrée (u2) duquel est raccordé le circuit différenciateur (DG) d'un circuit (R) de production du signal de réglage dans lequel l'entrée du circuit différenciateur (DG) est raccordée à l'entrée et à la sortie d'un discriminateur (E) situé dans la branche de ligne quadrifilaire de départ (VE) en aval du circuit de compensation (KG), caractérisé par le fait que la sortie (r) du signal de réglage du circuit (R) produisant le signal de réglage, dont le circuit différenciateur (DG) est raccordé, côté entrée, au discriminateur (E) – dont la sortie est reliée par l'intermédiaire d'un égaliseur adaptatif (AE), commandé également par le circuit différenciateur (DG), à un circuit combinatoire (EG) branché en amont de l'entrée du discriminateur et injectant le signal de sortie de l'égaliseur dans la branche de ligne quadrifilaire de départ (VE) –, est relié par l'intermédiaire d'un circuit (SG) délivrant un signal limite (déclencheur de Schmitt), à l'entrée de commande du circuit de commutation (U).

11. Montage suivant la revendication 10, caractérisé par le fait qu'un égaliseur de compromis (KE) est branché en amont du circuit de compensation (KG) dans la branche de ligne quadrifilaire de départ (VE).

12. Montage suivant la revendication 10 ou 11, caractérisé par le fait qu'un amplificateur de réglage (V) est branché en aval du circuit de compensation (KG) dans la branche de ligne quadrifilaire de départ (VE).

13. Montage suivant l'une des revendications 10 à 12, caractérisé par le fait que la sortie (r) du signal de réglage du circuit (R) de production du signal de réglage est reliée, par l'intermédiaire d'un circuit (Sr) transmettant simplement le signe du signal, à ladite autre entrée (u2) du dispositif de commutation (U).

14. Montage suivant l'une des revendications 10 à 13, caractérisé par le fait qu'un circuit (Se), qui transmet uniquement le signe du signal, est inséré dans la liaison de transmission du signal de réglage qui relie la sortie ($e_k$) du circuit de compensation (K) à l'entrée du signal de réglage du filtre variable (KF).

15. Montage suivant la revendication 12, caractérisé par le fait qu'un circuit d'affaiblissement (D2, D1) possédant un facteur d'affaiblissement proportionnel au facteur d'amplification de l'amplificateur (V) du signal de réglage, est inséré dans la voie de transmission du signal de réglage qui inclut ladite autre entrée (u) du dispositif de commutation, et également dans la voie de transmission du signal de réglage qui s'étend seulement en aval de l'amplificateur (V) du signal de réglage à partir de la branche de réception (VE) de la ligne quadrifilaire (VL), et passe par ladite entrée de commutation (u1).

16. Montage suivant l'une des revendications 10 à 15, caractérisé par le fait qu'un circuit (M) de formation de la moyenne du signal est inséré entre la sortie (r) du signal de réglage du circuit (R) de production du signal de réglage et le circuit (SG) produisant le signal limite (déclencheur de Schmitt).

17. Montage suivant l'une des revendications 10 à 16, caractérisé par le fait que la sortie (r) du signal de réglage du circuit (R) de production du signal de réglage est reliée par l'intermédiaire d'un circuit (rS), qui transmet uniquement le signal de signe, à l'entrée de commande de l'égaliseur adaptatif (AE).

18. Montage suivant l'une des revendications 12 à 17, caractérisé par une grandeur de réglage qui est supérieure dans le cas d'une amplification inférieure de l'amplificateur de réglage (V), et par une grandeur de réglage qui est plus faible dans le cas d'une amplification supérieure de l'amplificateur de réglage (V), pour le filtre variable (KF).

19. Montage suivant l'une des revendications 10 à 18, caractérisé par le fait qu'un égaliseur de compromis (KEz) est inséré dans la liaison reliant le circuit de compensation (KG) au circuit combinatoire (EG) branché en amont de l'entrée du discriminateur.

20. Montage suivant l'une des revendications 10 à 19, caractérisé par le fait qu'un égaliseur adaptatif (AEz) est inséré dans la liaison reliant le circuit de compensation (KG) au circuit combinatoire (EG) branché en amont de l'entrée du discriminateur.

**Claims**

1. Method for compensating cross-talk and/or echo signals in a digital communicaton system comprising an adaptive cross-talk and/or echo compensation circuit (K), which is provided between an incoming four-wire line branch (transmitting branch) (VS) particularly incoming at a hybrid cirucit (G) located between a four-wire line (VL) and a two-wire line (ZL), and an outgoing four-wire line branch (receiving branch) (VE), particularly outgoing from the hybrid circuit (G), comprising a variable filter (KF) and a connection element compensation element (KG) which couples the compensation signal into the outgoing four-wire line branch (VE), in accordance with which the compensation signal is formed in dependence on the difference between a decision circuit output signal formed, following an adaptive signal equalization, after the cross-talk and/or echo compensation and the decision circuit input signal or in dependence on the compensated received signal, characterized in that the filter coefficients, in operation, are first set as determined by the compensated received signal with a relatively great distance between decision circuit input signal and decision circuit output signal and are set as determined by this difference with a relatively small difference between decision circuit input signal and decision circuit output signal.

2. Method according to Claim 1, characterized in that the filter coefficients are set as determined by the compensated received signal with a relatively large averaged difference between decision circuit input signal and decision circuit output signal and are set as determinded by the difference between a decision circuit input signal and a decision circuit output signal with a relatively small averaged difference between decision circuit input signal and decision circuit output signal.

3. Method according to Claim 1 or 2, characterized in that a compromise equalization of the received signal is effected before the cross-talk and/or echo compensation.

4. Method according to one of Claims 1 to 3, characterized in that a regulated amplification is first effected after the cross-talk and/or echo compensation.

5. Method according to Claim 4, characterized in that the adjustment value for the filter coefficients is formed in dependence on the respective amplification, in that the adjustment value is made smaller for a higher amplification and the adjustment value is made larger for a lower amplification.

6. Method according to one of Claims 1 to 5, characterized in that the filter coefficients are only set as determined by the sign of the said difference or of the compensated received signal.

7. Method according to one of Claims 4 to 5, characterized in that the adjustment signal for the variable filter, which is derived from the difference between decision circuit output signal and decision circuit input signal, and with derivation of the adjustment signal corresponding to the compensated received signal from the compensated and amplified received signal, this adjustment signal, too, is multiplied by a factor which is reciprocally proportional to the amplification factor.

8. Method according to one of Claims 1 to 7, characterized in that a compromise equalization of the compensated received signal is effected.

9. Method according to one of Claims 1 to 8, characterized in that an adaptive equalization is effected between the compensation of the received signal and the amplitude decision.

10. Circuit arrangement for compensating cross-talk and/or echo signals in a digital communicaton system, comprising an adaptive cross-talk and/or echo compensation circuit (K), which is provided between an incoming four-wire line branch (VS), particularly the incoming four-wire line transmitting branch (VS) incoming at a hybrid circuit (G) located between a four-wire line (VL) and a two-wire line (ZL), and an outgoing four-wire line branch (VE), particularly the four-wire line receiving branch (VE) outgoing from the hybrid circuit (G), comprising a variable filter (KF) and a connection element (compensation element) (KG) which couples the compensation signal to the outgoing four-wire line branch (VE), in which arrangement a control signal connection leading from the output ($e_k$) of the cross-talk and/ or echo compensation circuit (K) to the control signal input of the variable filter (KF) extends via the one input (u1) of a transfer device (U), the other input (u2) of which is connected to the difference element (DG) of a control signal circuit (R) in which a difference element (DG) is connected at the input to the input and to the output of a decision circuit (E) located in the outgoing four-wire line branch (VE) behind the compensation element (KG), characterized in that the control signal output (r) of the control signal circuit (R), the difference element (DG) of which is connected at the input to the decision circuit (E), the output of which leads via an adaptive equalizer (AE), which is also controlled by the difference element (DG), to a connection element (EG) which precedes the decision circuit input and couples the equalizer output signal into the outgoing four-wire line branch (VE), is connected via a threshold detector (Schmitt trigger) (SG) to the control input of the transfer device (U).

11. Circuit arrangement according to Claim 10, characterized in that the compensation element (KG) in the outgoing four-wire line branch (VE) is preceded by a compromise equalizer (KE).

12. Circuit arrangement according to Claim 10 or 11, characterized in that the compensation element (KG) in the outgoing four-wire line branch (VE) is followed by a control amplifier (V).

13. Circuit arrangement according to one of Claims 10 to 12, characterized in that the control signal output (r) of the control signal circuit (R) is connected via an element (Sr), which only transmits the signal sign, to the said other input (u2) of the transfer device (U).

14. Circuit arrangement according to one of Claims 10 to 13, characterized in that an element (Se) which only transmits the signal sign, is inserted in the control signal connection leading from the output $(e_k)$ of the compensation circuit (K) to the control signal input of the variable filter (KF).

15. Circuit arrangement according to Claim 12, characterized in that an attenuating section (D2, D1) having an attenuation factor which is proportional to the amplification factor of the control signal amplifier (V) is in each case inserted into the control signal path extending via the said other input (u2) of the transfer device (U) and, where the control signal path extending via the said one input (u1) of the transfer device (U) branches away from the receiving branch (VE) of the four-wire line (VL) only after the control signal amplifier (V), also enters this control signal path.

16. Circuit arrangement according to one of the Claims 10 to 15, characterized in that a signal averaging circuit (M) is inserted between the control signal output (r) of the control signal circuit (R) and the threshold detector (Schmitt trigger) (SG).

17. Circuit arrangement according to one of Claims 10 to 16, characterized in that the control signal output (r) of the control signal circuit (R) is connected to the control input of the adaptive equalizer (AE) via an element (rS) which only transmits the signal sign.

18. Circuit arrangement according to one of Claims 12 to 17, characterized by an adjustment value which is higher for a lower gain of the control amplifier (V) and by an adjustment value which is smaller for a higher gain of the control amplifier (V) for the variable filter (KF).

19. Circuit arrangement according to one of Claims 10 to 18, characterized in that a compromise equalizer (KEz) is inserted into the connection leading from the compensation element (KG) to the connection element (EG) preceding the decision circuit input.

20. Circuit arrangement according to one of Claims 10 to 19, characterized in that an adaptive equalizer (AEz) is inserted into the connection leading from the compensation element (KG) to the connection element (EG) preceding the decision circuit input.

FIG 1

FIG 2

EP 0 144 067 B1

FIG 3